# FASCICULE DE BREVET EUROPEEN

(11) **EP 3 052 324 B1**
(45) Date de publication et mention de la délivrance du brevet: **06.12.2017**
(21) Numéro de dépôt: 14780460.3
(22) Date de dépôt: 01.10.2014
(51) Int. Cl.: B60C 11/00, B60C 13/02, B60C 15/00, B60C 13/00, B62J 6/10

(54) **PNEUMATIQUE POUR VELO**
FAHRRADREIFEN
BICYCLE TYRE

(30) Priorité: 02.10.2013 FR 1359538
(43) Date de publication de la demande: 10.08.2016
(73) Titulaire: Compagnie Générale des Etablissements Michelin, 63000 Clermont-Ferrand (FR)
(72) Inventeur: BESTGEN, Luc, F-63040 Clermont-Ferrand Cedex 9 (FR); OLSOMMER, David, F-63040 Clermont-Ferrand Cedex 9 (FR)
(74) Mandataire: Millanvois, Patrick Jacques Jean
(86) Numéro de dépôt international: PCT/EP2014/071004
(87) Numéro de publication internationale: WO 2015/049263

(56) Documents cités:
- DE-A1- 4 011 567
- DE-U1- 20 314 210
- US-A- 5 165 776

## Description

La présente invention concerne un pneumatique pour vélo et, plus particulièrement, un pneumatique pour vélo destiné à coopérer avec un dispositif d'assistance électrique.

Par dispositif d'assistance électrique, on entend un dispositif électrique, monté sur le vélo et apte à entraîner en rotation au moins une roue du vélo.

Le document DE-20314210-U1 décrit un principe d'entraînement d'un vélo par un dispositif d'assistance électrique ou moteur électrique dans lequel un pignon moteur engrène sur une denture solidaire du cercle de la jante avant du vélo, ladite denture étant une denture interne, c'est à dire dont les dents pointent vers l'axe de roue. Un inconvénient de ce dispositif est que la denture de la jante est susceptible de retenir des cailloux.

Les documents DE-4011567-A1 et US-5165776 décrivent un dispositif générateur d'électricité, pour l'éclairage d'un vélo, destiné à coopérer avec un pneumatique comprenant une denture de génératrice radiale, positionnée circonférentiellement sur un flanc du pneumatique et destinée à coopérer avec une denture complémentaire d'un pignon du dispositif générateur d'électricité. La denture positionnée sur le flanc de pneumatique est conçue pour entraîner en rotation le pignon libre du dispositif générateur d'électricité. Toutefois cette denture n'est pas dimensionnée pour être entraînée en rotation par le pignon moteur d'un dispositif d'assistance électrique.

L'invention a pour objet de proposer un pneumatique pour vélo comprenant une denture de génératrice sensiblement radiale, positionnée circonférentiellement sur un flanc du pneumatique et destinée à coopérer avec une denture complémentaire d'un pignon moteur d'un dispositif d'assistance électrique pour vélo.

L'invention propose pour cela un pneumatique pour vélo, comprenant:
- deux flancs reliant une bande de roulement à deux bourrelets,
- une denture continue, de génératrice sensiblement radiale par rapport à l'axe de rotation du pneumatique de direction axiale, positionnée circonférentiellement sur une face axialement extérieure d'au moins un flanc, et destinée à coopérer avec une denture complémentaire,
- la denture étant constituée de dents équidistantes d'un pas p,
- chaque dent ayant une longueur l, selon la direction de la génératrice, et une section sensiblement triangulaire, selon un plan perpendiculaire à la génératrice,
- la section sensiblement triangulaire comprenant un premier et un deuxième côté issus d'un premier sommet, appelé sommet de la dent, et un troisième côté opposé au premier sommet et positionné sur la face axialement extérieure du flanc,
- les premier et deuxième côtés formant respectivement, avec la direction perpendiculaire au troisième côté, un premier et un deuxième angle d'ouverture,
- la distance entre le sommet de la dent et sa projection orthogonale sur le troisième côté définissant la hauteur h de la dent,
- chaque dent comprenant un matériau élastomérique ayant un module d'élasticité en cisaillement G*,
- le module d'élasticité en cisaillement G* du matériau élastomérique des dents étant au moins égal à un module d'élasticité en cisaillement seuil G*ₛ, le module d'élasticité en cisaillement seuil G*ₛ étant tel que le déplacement d du sommet de chaque dent est égal à 0.2 fois la hauteur h de la dent, sous l'action d'une pression uniforme, appliquée par la denture complémentaire au côté formant l'angle d'ouverture le plus faible, égale à 650/(l*h*(2.67-0.33*p)).

Un pneumatique pour vélo a une géométrie extérieure, caractérisée en particulier par un diamètre extérieur, un diamètre de jante, ainsi qu'une hauteur et une largeur de section, mesurées dans un plan méridien passant par l'axe de rotation du pneumatique. En particulier, ces caractéristiques géométriques sont mesurées sur un pneumatique monté sur sa jante et gonflé à sa pression d'utilisation, au sens des normes de la European Tyre and Rim Technical Organization ou ETRTO.

Les flancs sont les portions latérales d'un pneumatique reliant la bande de roulement, destinée à entrer en contact avec un sol, aux bourrelets, destinés à entrer en contact avec une jante.

Une denture est définie géométriquement par une génératrice. Pour une denture selon l'invention, la génératrice est sensiblement radiale, c'est-à-dire qu'elle forme un angle faible avec la direction radiale du pneumatique, perpendiculaire à la direction axiale de l'axe de rotation du pneumatique. Plus précisément une génératrice sensiblement radiale forme un angle au plus égal à 45°, avec la direction tangente à la face axialement extérieure du flanc et située dans un plan méridien ou radial du pneumatique perpendiculaire à l'axe de rotation du pneumatique. La face axialement extérieure du flanc de pneumatique est la face du flanc en contact avec l'air atmosphérique, par opposition à la face axialement intérieure du flanc en contact avec l'air de gonflage du pneumatique.

En outre cette denture est positionnée circonférentiellement sur une face axialement extérieure d'au moins un flanc du pneumatique, c'est-à-dire selon la direction circonférentielle tangente à la surface de roulement du pneumatique et orientée selon le sens de roulement du pneumatique. De plus, la denture est continue, c'est-à-dire qu'elle est positionnée sur toute la circonférence du flanc.

Plus précisément, la denture est constituée de dents équidistantes d'un pas p, c'est-à-dire par une juxtaposition de dents deux à deux séparées par une distance ou pas constant. Le pas de la denture est une caractéristique de la capacité d'engrènement de la denture avec une denture complémentaire d'un pignon moteur d'un dispositif d'assistance électrique, et conditionne, en particulier le nombre de dents de la denture qui vont être simultanément en contact avec la denture complémentaire du pignon pour passer le couple moteur souhaité. Le pas de la denture dépend également du diamètre du pignon.

Chaque dent est caractérisée géométriquement par une longueur l, mesurée selon la génératrice de la denture, et par une section sensiblement triangulaire, selon un plan perpendiculaire à la génératrice. Une section sensiblement triangulaire est une section à trois côtés, pouvant avoir des sommets arrondis, c'est-à-dire non nécessairement anguleux, et des côtés non nécessairement rectilignes. Une section sensiblement triangulaire s'inscrit dans une section triangulaire au sens mathématique. Cette section sensiblement triangulaire comprend un premier et un deuxième côté issus d'un premier sommet, appelé sommet de la dent, et un troisième côté opposé au premier sommet et positionné sur la face axialement extérieure du flanc. Les premier et deuxième côtés forment respectivement, avec la direction perpendiculaire au troisième côté, un premier et un deuxième angle d'ouverture. La distance entre le sommet de la dent et sa projection orthogonale sur le troisième côté définissent la hauteur h de la dent.

La longueur l des dents définit la longueur d'engrènement maximale possible avec une denture complémentaire. La hauteur h des dents définit la profondeur d'engrènement maximale possible avec une denture complémentaire.

Concernant le matériau constitutif de la denture, chaque dent comprend un matériau élastomérique ayant un module d'élasticité en cisaillement G*.

Selon l'invention, le module d'élasticité en cisaillement G* du matériau élastomérique des dents est au moins égal à un module d'élasticité en cisaillement seuil G*ₛ, le module d'élasticité en cisaillement seuil G*ₛ étant tel que le déplacement d du sommet de chaque dent est égal à 0.2 fois la hauteur h de la dent, sous l'action d'une pression uniforme, appliquée par la denture complémentaire au côté formant l'angle d'ouverture le plus faible, égale à 650/(l*h*(2.67-0.33*p)).

Le module d'élasticité en cisaillement G* ou module complexe de cisaillement dynamique G* est mesuré sur une éprouvette normalisée, à l'aide d'un viscoanalyseur (par exemple, de marque Metravib VA4000), selon la norme ASTM D 5992-96, à la température de 23°C et à un balayage en amplitude de 10 %.

Le module d'élasticité en cisaillement seuil G*ₛ est déterminé par calcul, à l'aide de simulations par éléments finis, avec une modélisation non-linéaire en déformation plane avec prise en compte de l'incompressibilité du matériau élastomérique de la dent. Ainsi, une seule dent est modélisée avec les conditions aux limites suivantes : le troisième côté positionné sur la face axialement extérieure du flanc est bloqué en déplacement, le premier ou le deuxième côté, ayant l'angle d'ouverture le plus faible, est soumis à une pression uniforme égale à 650/ (l*h*(2.67-0.33*p)). Le matériau élastomérique de la dent est un matériau hookéen incompressible, ayant un module de Young E* et un coefficient de Poisson égal à 0.49. Pour un module de Young E* donné, on détermine alors par calcul le déplacement d du sommet de la dent. On en déduit le rapport d/h du déplacement du sommet de la dent par la hauteur de la dent. En répétant ce processus, pour différentes valeurs du module de Young E*, on en déduit une relation entre le module de Young E* et le rapport d/h du déplacement du sommet de la dent par la hauteur de la dent. On détermine alors, par approximations successives, le module de Young seuil E*ₛ tel que ce rapport d/h est égal à 0.2. On en déduit alors le module d'élasticité en cisaillement seuil G*ₛ par la relation G*ₛ = E*ₛ/3.

La pression uniforme P appliquée sur la dent, dans les simulations numériques, est prise égale à 650/ (l*h*(2.67-0.33*p)), P étant exprimée en bars. La pression uniforme P, exprimée en bars, est égale à P=F*10/(S*N), où F, exprimée en N, est la force motrice appliquée par la denture complémentaire du pignon moteur du dispositif d'assistance électrique sur la denture du pneumatique, où S, exprimée en mm², est la surface d'application de la force motrice sur une dent et où N est le nombre de dents engrenant simultanément avec la denture complémentaire. Dans l'invention, la force motrice maximale, correspondant à une puissance motrice égale à 215W et appliquée à une vitesse de l'ordre de 3.3 m/s, est égale à 65N. La surface d'application de la force motrice sur une dent est égale à S=l*h, où l et h sont respectivement la longueur et la hauteur de la dent, exprimées en mm. Enfin, le nombre N de dents engrenant simultanément, compte tenu du diamètre du pignon moteur, est estimé à N=2.67-0.33*p, où p est le pas de la denture, exprimé en mm.

La pression uniforme est appliquée sur le premier ou deuxième côté, issu du sommet de la dent, et formant l'angle d'ouverture le plus faible, dans le cas d'une dent dissymétrique. Le côté soumis à la pression uniforme est appelé côté moteur ou face motrice. Le côté non soumis à la pression uniforme est appelé côté non moteur ou face non motrice. Dans le cas d'une dent dissymétrique, il est avantageux que la pression uniforme soit ainsi appliquée sur le côté d'angle d'ouverture le plus faible, c'est-à-dire que le côté moteur ait l'angle d'ouverture le plus faible. Ceci permet de passer un couple moteur supérieur à celui obtenu avec un profil symétrique de la dent, c'est-à-dire à des angles d'ouverture des premier et deuxième côté égaux. En effet un profil dissymétrique entraîne une flexion de la dent plus faible qu'un profil symétrique, donc un passage d'effort plus important.

La valeur maximale du rapport d/h entre le déplacement d du sommet de la dent et la hauteur h de la dent, pour la détermination du module de Young seuil E^{*}ₛ, est prise égale à 0.2 pour garantir une rigidité de flexion minimale de la dent sous l'action de la pression uniforme, résultant d'un couple moteur, généralement compris entre 20 Nm et 50 Nm, et pouvant atteindre 60 Nm. Il en résulte que le contact est maintenu entre la dent déformée et la denture complémentaire indéformable, ce qui garantit le passage du couple moteur.

Avantageusement, la hauteur h des dents est au moins égale à 0.6 mm et au plus égale à 3 mm.

Encore avantageusement, la longueur l des dents est au moins égale à 0.15 fois et au plus égale à 0.50 fois la largeur de section S du pneumatique. La largeur de section S du pneumatique est la distance axiale, mesurée parallèlement à l'axe de rotation du pneumatique, entre les points axialement les plus extérieurs des flancs du pneumatique, le pneumatique étant monté sur sa jante et gonflé à sa pression d'utilisation, au sens des normes de la European Tyre and Rim Technical Organization ou ETRTO.

Ces intervalles de valeurs respectifs pour la hauteur h et la longueur l des dents impliquent que la surface de contact entre une dent de la denture du pneumatique et une dent de la denture complémentaire du pignon du dispositif d'assistance électrique, avec laquelle la denture du pneumatique est destinée à coopérer, est comprise dans un intervalle de valeurs permettant de passer le couple moteur généré par le dispositif d'assistance électrique à la roue. Ces intervalles de valeurs pour la hauteur h et la longueur l prennent également en compte des contraintes d'encombrement pour le positionnement de la denture sur le flanc du pneumatique.

Le pas p de la denture est avantageusement au moins égal à 1.8 mm et au plus égal à 5.5 mm. Le pas p de la denture est la distance mesurée entre les sommets de deux dents consécutives, dans un plan perpendiculaire à la génératrice.

Il a été constaté que, plus le pas de la denture est élevé, plus il génère un bruit important. En revanche, un pas plus élevé est plus tolérant à un défaut d'alignement entre la denture de pneumatique et la denture complémentaire d'un pignon. Par ailleurs, un pas plus élevé est moins sensible à la présence de corps étrangers, tels que, par exemple, de la neige ou de la boue, qui sont plus facilement évacués. A contrario, un pas plus faible est plus silencieux, mais moins tolérant à un défaut d'alignement ou à la présence de corps étrangers. L'intervalle de valeurs préconisé pour le pas de la denture permet d'obtenir ainsi une denture efficace en passage de couple, relativement silencieuse et tolérante à un défaut d'alignement ou à la présence de corps étrangers.

Le pas p de la denture est encore plus avantageusement au moins égal à 2 mm et au plus égal à 3 mm. Cet intervalle de valeurs préféré pour le pas de la denture permet d'optimiser le compromis entre efficacité, bruit et tolérance à l'environnement de la denture. A titre d'exemple, un pas de denture de 2.3 mm a donné de bons résultats vis-à-vis de ce compromis.

Il est également avantageux que la génératrice de la denture forme, avec la direction du plan radial tangente à la face axialement extérieure du flanc, un angle au moins égal à 4° et au plus égal à 40°. Cet angle correspond à l'angle d'hélice de la denture de forme hélicoïdale.

Cette inclinaison de la génératrice de la denture, par rapport à la direction du plan radial tangente à la face axialement extérieure du flanc, augmente le rapport de conduite entre la denture du pneumatique et la denture complémentaire du pignon. Ainsi, le bruit généré est sensiblement réduit par rapport à une denture de génératrice strictement radiale, c'est-à-dire formant un angle nul par rapport à la direction radiale.

Il est encore plus avantageux que la génératrice de la denture forme, avec la direction du plan radial tangente à la face axialement extérieure du flanc, un angle au moins égal à 15° et au plus égal à 30°. Un angle de 25° est une configuration particulièrement avantageuse en termes de bruit généré.

Avantageusement les premier et deuxième côtés de la section sensiblement triangulaire de chaque dent ont un profil rectiligne. En effet, un côté rectiligne présente une surface de contact plus élevée avec la denture complémentaire et donc permet de passer un couple plus élevé.

Encore avantageusement les premier et deuxième côtés de la section sensiblement triangulaire de chaque dent ont un profil curviligne. En effet, des côtés curvilignes permettent d'augmenter la rigidité de flexion de la dent et donc de passer un couple plus élevé.

Les côtés moteur et non moteur peuvent avoir également un profil combinant des parties rectiligne et curviligne pour cumuler les avantages précédemment décrits.

La génératrice de la denture peut également être curviligne, pour augmenter la longueur d'engrènement par rapport à une génératrice généralement rectiligne, d'où un gain potentiel en passage de couple.

Selon un mode de réalisation préféré, la denture comprend un matériau textile, de préférence de type polyamide aliphatique.

Le matériau textile est préférentiellement un polyamide aliphatique ou nylon, qui est un matériau couramment utilisé dans le domaine du pneumatique, en raison de son coût et de sa compatibilité avec les matériaux élastomériques.

Un matériau textile a le plus souvent la forme d'un tissu. Mais il peut également être constitué de renforts dispersés.

La présence d'un matériau textile, en plus du matériau élastomérique, permet d'améliorer la tenue à l'abrasion de la denture, résultant des cycles d'engrènement. Elle permet en outre de diminuer le bruit généré par un effet d'amortissement du matériau textile. Enfin, au niveau de la fabrication, un matériau textile, ayant une élasticité orthotrope, suit les déformations lors du moulage de la forme de la dent, au cours de la conformation du pneumatique lors de sa cuisson.

Selon une variante préférée du mode de réalisation préféré, la denture comprend, axialement à l'extérieur du matériau élastomérique, un matériau textile, de préférence de type polyamide aliphatique.

Un matériau textile, positionné à l'extérieur du matériau élastomérique, présente l'avantage d'être facile à mettre en place. En outre, il permet d'augmenter le rendement de la transmission en offrant un meilleur glissement entre la denture du pneumatique et la denture complémentaire, diminuant ainsi les pertes par frottement par un effet lubrifiant.

Les caractéristiques et autres avantages de l'invention seront mieux compris à l'aide des figures schématiques et non représentées à l'échelle, en annexe:
- figure 1: vue en perspective d'une portion de pneumatique pour vélo comprenant une denture selon l'invention,
- figure 2: vue en coupe d'une denture selon l'invention, dans un plan de coupe perpendiculaire à la génératrice de la denture,
- figure 3A: vue en coupe d'un premier exemple de dent à côtés rectilignes,
- figure 3B: évolution du module de Young E* du matériau élastomérique en fonction du rapport d/h du déplacement du sommet de dent, dans le cas du premier exemple de dent représenté à la figure 3A,
- figure 4A: vue en coupe d'un deuxième exemple de dent à côtés rectilignes et à sommet arrondi,
- figure 4B: évolution du module de Young E* du matériau élastomérique en fonction du rapport d/h du déplacement du sommet de dent, dans le cas du deuxième exemple de dent représenté à la figure 3B.

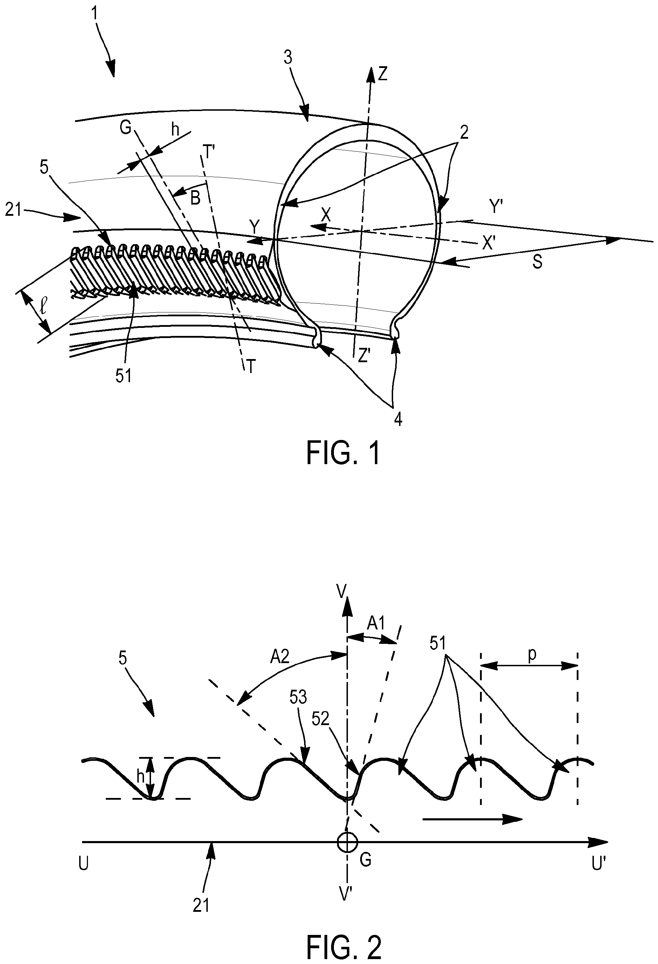

La figure 1 présente une portion de pneumatique 1, comprenant une denture 5 selon l'invention. Le pneumatique 1 comprend deux flancs 2 reliant une bande de roulement 3, destinée à entrer en contact avec un sol (non représenté), à deux bourrelets 4, destinés à entrer en contact avec une jante de montage (non représentée). Les directions XX', YY' et ZZ' désignent respectivement la direction circonférentielle, tangente à la bande de roulement 3 du pneumatique et orientée selon le sens de roulement du pneumatique, la direction axiale, parallèle à l'axe de rotation (non représenté) du pneumatique, et la direction radiale, perpendiculaire à l'axe de rotation du pneumatique. Le pneumatique 1 a une largeur de section S, mesurée selon la direction axiale YY', entre les points les plus axialement extérieurs des faces axialement extérieures 21 des flancs 2. Le pneumatique 1 comprend une denture 5 continue, de génératrice G sensiblement radiale par rapport à l'axe de rotation du pneumatique de direction axiale YY', positionnée circonférentiellement, selon la direction XX', sur une face axialement extérieure 21 d'au moins un flanc 2. La génératrice G forme un angle B, avec la direction TT', positionnée dans le plan radial ou méridien YZ et tangente à la face axialement extérieure 21 du flanc 2. La denture 5 comprend des dents 51 ayant une hauteur h et une longueur l, les dents 51 comprenant un matériau élastomérique ayant un module d'élasticité en cisaillement G*.

La figure 2 est une vue en coupe d'une denture 5 selon l'invention, dans un plan de coupe UV, perpendiculaire à la génératrice G de la denture 5. La denture 5 est constituée d'une juxtaposition de dents 51, espacées d'un pas p constant. Le pas p est la distance mesurée entre les sommets de deux dents 51 consécutives, selon la direction UU' parallèle à la face axialement extérieure 21 du flanc 2. Chaque dent 51 a une hauteur h, mesurée entre la base et le sommet de la dent 51, selon la direction VV' perpendiculaire à la face axialement extérieure 21 du flanc 2. Chaque dent 51 comprend une face motrice ou côté moteur 52 et une face non motrice ou côté non moteur 53. Dans le mode de réalisation représenté sur la figure 2, l'angle d'ouverture A₁ de la face motrice 52, par rapport à la direction VV', est inférieur à l'angle d'ouverture A₂ de la face non motrice 53, par rapport à la direction VV'. En outre, la figure 2 illustre des dents comportant des faces motrice et non motrice rectilignes. Dans le cas d'une face curviligne, l'angle d'ouverture décrit ci-dessus doit être mesuré entre la tangente au point de la face curviligne correspondant à la demi-hauteur de dent et la direction VV'.

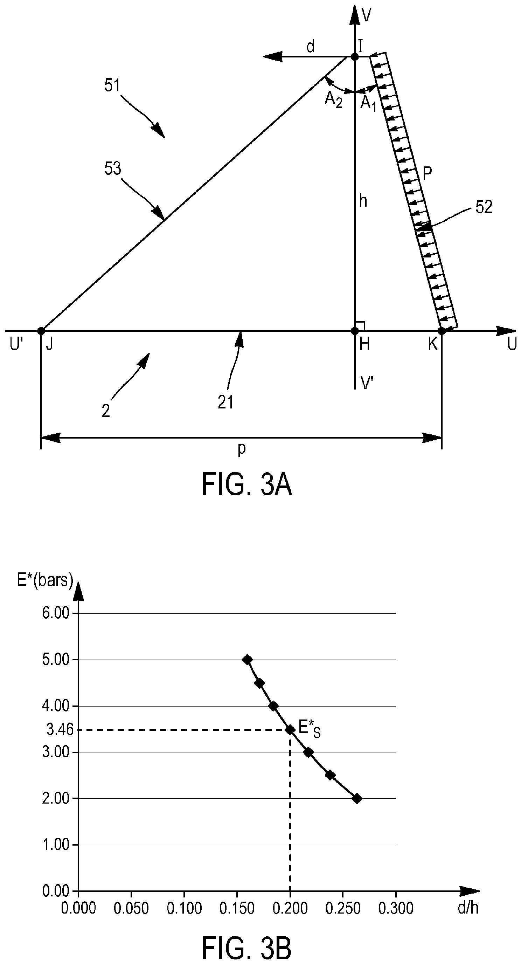

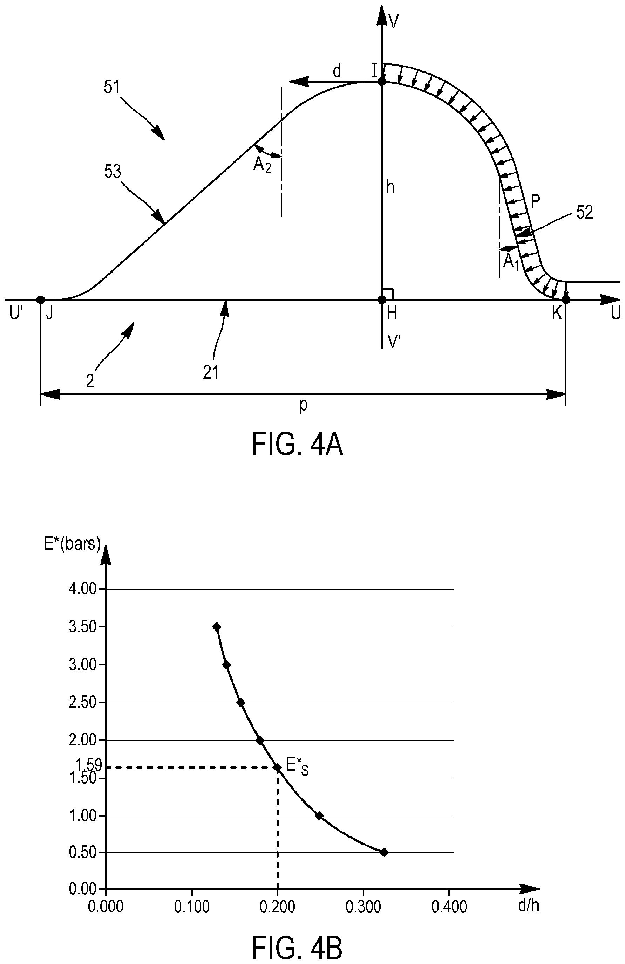

Les figures 3A et 4A sont des vues en coupe d'une dent 51 selon l'invention, dans un plan de coupe UV, perpendiculaire à la génératrice G de la denture 5. Chacune des dents représentées respectivement sur les figures 3A et 3B a une section sensiblement triangulaire IJK, comprenant un premier et un deuxième côté (IK, IJ) issus d'un premier sommet I, appelé sommet de la dent, et un troisième côté JK opposé au premier sommet I et positionné sur la face axialement extérieure 21 du flanc 2. Les premier et deuxième côtés (IK, IJ) forment respectivement, avec la direction (VV') perpendiculaire au troisième côté JK, un premier et un deuxième angle d'ouverture (A₁, A₂). Dans les exemples représentés, le premier côté IK est le côté moteur ou face motrice 52 de la dent 51, sur laquelle est appliquée la pression uniforme P, et le deuxième côté IJ est le côté non moteur ou face non motrice 52 de la dent 51, non soumise à la pression uniforme P. Le premier angle d'ouverture A₁ du premier côté IK est inférieur au deuxième angle d'ouverture A₂ du deuxième côté IJ. Le pas p de la denture est égal à la longueur du troisième côté JK. La distance entre le sommet I de la dent 51 et sa projection orthogonale H sur le troisième côté JK définit la hauteur h de la dent 51. d est le déplacement du sommet I, lorsque la face motrice 52 de la dent 51 est soumise à la pression uniforme P. Seul l'état initial non déformé de la dent 51 est représenté sur les figures 3A et 4A.

Les figures 3B et 4B représentent respectivement les courbes d'évolution du module de Young E* en fonction du rapport d/h du déplacement d du sommet de la dent sur la hauteur h de la dent, respectivement pour les dents représentées sur les figures 3A et 4A. Ces courbes permettent de déduire, dans chacun des cas, la valeur seuil E*ₛ du module de Young correspondant à un rapport d/h égal à 0.2. En d'autres termes, cette valeur seuil correspond à une déformation de la dent égale à 20%.

Plusieurs configurations de denture, dont la conception a été optimisée par des simulations par éléments finis, ont été expérimentées par les inventeurs pour un pneumatique pour vélo de dimension 37-622.

Le premier exemple de dent, représenté par les figures 3A et 3B, est défini par les caractéristiques suivantes :
- pas de la denture p=1.8 mm
- longueur de dent 1=8 mm
- hauteur de dent h=1.22 mm
- premier angle d'ouverture A₁=16°
- deuxième angle d'ouverture A₂=48°
- pression uniforme P=32.1 bars (déduite de la formule P=650/(l*h*(2.67-0.33p))

Le tableau 1 ci-dessous présente les résultats des simulations numériques par éléments finis réalisées sur ce premier exemple de dent :

**Tableau 1**

| Module de Young (bar) | Déplacement d/ Hauteur h |
|---|---|
| 2.00 | 0.262 |
| 2.50 | 0.236 |
| 3.00 | 0.215 |
| 3.50 | 0.198 |
| 4.00 | 0.183 |
| 4.50 | 0.170 |
| 5.00 | 0.159 |

Le module de Young seuil E^{*}ₛ, correspondant à un rapport d/h égal à 0.2, est égal à 3.46 bars. Par conséquent, le module d'élasticité en cisaillement seuil G*ₛ est égal à 3.46/3=1.15 bar. En conclusion, le module d'élasticité en cisaillement du matériau élastomérique de la dent doit au moins être égal à 1.15 bar, pour cette première géométrie de dent.

Le deuxième exemple de dent, représenté par les figures 4A et 4B, est défini par les caractéristiques suivantes :
- pas de la denture p=2.3 mm
- longueur de dent 1=8 mm
- hauteur de dent h=0.94 mm
- premier angle d'ouverture A₁=17°
- deuxième angle d'ouverture A₂=42°
- pression uniforme P=45.2 bars (déduite de la formule P=650/(l*h*(2.67-0.33p))

Le tableau 2 ci-dessous présente les résultats des simulations numériques par éléments finis réalisées sur ce premier exemple de dent :

**Tableau 2**

| Module de Young (bar) | Déplacement d/ Hauteur h |
|---|---|
| 0.50 | 0.323 |
| 1.00 | 0.243 |
| 1.50 | 0.201 |
| 2.00 | 0.174 |
| 2.50 | 0.153 |
| 3.00 | 0.138 |
| 3.50 | 0.125 |

Le module de Young seuil E*ₛ, correspondant à un rapport d/h égal à 0.2, est égal à 1.59 bars. Par conséquent, le module d'élasticité en cisaillement seuil G*ₛ est égal à 1.59/3=0.53 bar. En conclusion, le module d'élasticité en cisaillement du matériau élastomérique de la dent doit au moins être égal à 0.53 bar, pour cette deuxième géométrie de dent.

L'invention a été essentiellement décrite pour une denture, destinée à passer un niveau de force motrice donné à l'aide d'une géométrie de denture donnée, dans le cas où la denture est constituée d'un matériau élastomérique seul dont on cherche à optimiser le module d'élasticité en cisaillement G*. L'utilisation d'un matériau textile en complément du matériau élastomérique va contribuer à augmenter la rigidité de cisaillement de la dent, qui est alors constitué d'un matériau composite élastomère/textile, donc va permettre d'abaisser éventuellement le module d'élasticité en cisaillement G* du matériau élastomérique. Par ailleurs, la relation exprimant la pression uniforme appliquée en fonction de la force motrice, de la géométrie de la denture et du nombre de dents engrenant simultanément peut bien entendu être adaptée en fonction du couple moteur maximal à passer et de la géométrie de la denture complémentaire du pignon moteur du dispositif d'assistance électrique, conditionnant le nombre de dents engrenant simultanément.

## Revendications

1. Pneumatique (1) pour vélo, comprenant:
- deux flancs (2) reliant une bande de roulement (3) à deux bourrelets (4),
- une denture (5) continue, de génératrice (G) sensiblement radiale par rapport à l'axe de rotation du pneumatique de direction axiale (YY'), positionnée circonférentiellement sur une face axialement extérieure (21) d'au moins un flanc (2), et destinée à coopérer avec une denture complémentaire,
- la denture (5) étant constituée de dents (51) équidistantes d'un pas p,
- chaque dent (51) ayant une longueur l, selon la direction de la génératrice (G), et une section sensiblement triangulaire (IJK), selon un plan (UV) perpendiculaire à la génératrice (G),
- la section sensiblement triangulaire (IJK) comprenant un premier et un deuxième côté (IK, IJ) issus d'un premier sommet (I), appelé sommet de la dent, et un troisième côté (JK) opposé au premier sommet (I) et positionné sur la face axialement extérieure (21) du flanc (2),
- les premier et deuxième côtés (IJ, IK) formant respectivement, avec la direction (VV') perpendiculaire au troisième côté (JK), un premier et un deuxième angle d'ouverture (A₁, A₂),
- la distance entre le sommet (I) de la dent (51) et sa projection orthogonale (H) sur le troisième côté (JK) définissant la hauteur h de la dent (51),
- chaque dent (51) comprenant un matériau élastomérique ayant un module d'élasticité en cisaillement G*,
**caractérisé en ce que** le module d'élasticité en cisaillement G* du matériau élastomérique des dents (51) est au moins égal à un module d'élasticité en cisaillement seuil G*ₛ, le module d'élasticité en cisaillement seuil G*ₛ étant tel que le déplacement d du sommet (I) de chaque dent (51) est égal à 0.2 fois la hauteur h de la dent (51), sous l'action d'une pression uniforme P, appliquée par la denture complémentaire au côté (IK, IJ) formant l'angle d'ouverture (A₁, A₂) le plus faible, égale à 650/(l*h*(2.67-0.33*p)).

2. Pneumatique (1) pour vélo selon la revendication 1 **dans lequel** la hauteur h des dents (51) est au moins égale à 0.6 mm et au plus égale à 3 mm.

3. Pneumatique (1) pour vélo selon l'une des revendications 1 ou 2, le pneumatique (1) ayant une largeur de section S, **dans lequel** la longueur l des dents (51) est au moins égale à 0.15 fois et au plus égale à 0.50 fois la largeur de section S du pneumatique.

4. Pneumatique (1) pour vélo selon l'une quelconque des revendications 1 à 3 **dans lequel** le pas p de la denture (5) est au moins égal à 1.8 mm et au plus égal à 5.5 mm.

5. Pneumatique (1) pour vélo selon l'une quelconque des revendications 1 à 4 **dans lequel** le pas p de la denture (5) est au moins égal à 2 mm et au plus égal à 3 mm.

6. Pneumatique (1) pour vélo selon l'une quelconque des revendications 1 à 5 **dans lequel** la génératrice (G) de la denture (5) forme, avec la direction (TT') du plan radial (YZ) tangente à la face axialement extérieure (21) du flanc (2), un angle (B) au moins égal à 4° et au plus égal à 40°.

7. Pneumatique (1) pour vélo selon l'une quelconque des revendications 1 à 6 **dans lequel** la génératrice (G) de la denture (5) forme, avec la direction (TT') du plan radial (YZ) tangente à la face axialement extérieure (21) du flanc (2), un angle (B) au moins égal à 15° et au plus égal à 30°.

8. Pneumatique (1) pour vélo selon l'une quelconque des revendications 1 à 7 **dans lequel** les premier et deuxième côtés (IK, IJ) de la section sensiblement triangulaire (IJK) de chaque dent (51) ont un profil rectiligne.

9. Pneumatique (1) pour vélo selon l'une quelconque des revendications 1 à 8 **dans lequel** les premier et deuxième côtés (IK, IJ) de la section sensiblement triangulaire (IJK) de chaque dent (51) ont un profil curviligne.

10. Pneumatique (1) pour vélo selon l'une quelconque des revendications 1 à 9 **dans lequel** la denture (5) comprend un matériau textile, de préférence de type polyamide aliphatique.

## Patentansprüche

1. Fahrradreifen (1), umfassend:
- zwei Seitenwände (2), die einen Laufstreifen (3) mit zwei Wulsten (4) verbinden,
- eine durchgehende Zahnung (5) einer Mantellinie (G), die im Wesentlichen radial im Verhältnis zu der Drehachse des Reifens axialer Richtung (YY') verläuft, die in Umfangsrichtung auf einer axial äußeren Seite (21) mindestens einer Seitenwand (2) positioniert ist und dazu bestimmt ist, mit einer ergänzenden Zahnung zusammenzuwirken,
- wobei die Zahnung (5) aus Zähnen (51) gebildet ist, die um einen Abstand p abstandsgleich sind,
- wobei jeder Zahn (51) in Richtung der Mantellinie (G) eine Länge l und gemäß einer Ebene (UV), die zu der Mantellinie (G) parallel ist, einen im Wesentlichen dreieckigen Abschnitt (IJK) aufweist,
- wobei der im Wesentlichen dreieckige Abschnitt (IJK) eine erste und eine zweite Seite (IK, IJ), die aus einem ersten Scheitelpunkt (I), der als Scheitelpunkt des Zahns bezeichnet wird, hervorgehen, und eine dritte Seite (JK), die dem ersten Scheitelpunkt (I) gegenüberliegt und auf der axial äußeren Fläche (21) der Seitenwand (2) positioniert ist, umfasst,
- wobei die erste und die zweite Seite (IJ, IK) jeweils mit der Richtung (VV'), die senkrecht zu der dritten Seite (JK) verläuft, einen ersten und einen zweiten öffnungswinkel (A₁, A₂) bilden,
- wobei der Abstand zwischen dem Scheitelpunkt (I) des Zahns (51) und seiner orthogonalen Projektion (H) auf der dritten Seite (JK) die Höhe h des Zahns (51) definiert,
- wobei jeder Zahn (51) ein Elastomermaterial umfasst, das einen Scher-Elastizitätsmodul G* aufweist,
**dadurch gekennzeichnet, dass** der Scher-Elastizitätsmodul G* des Elastomermaterials der Zähne (51) zumindest gleich einem Schwellen-Scher-Elastizitätsmodul G*ₛ ist, wobei der Schwellen-Scher-Elastizitätsmodul G*ₛ derart ist, dass die Verschiebung d des Scheitelpunkts (I) jedes Zahns (51) gleich 0,2 Mal die Höhe h des Zahns (51) unter der Einwirkung eines gleichmäßigen Drucks P ist, der von der ergänzenden Zahnung auf die Seite (IK, IJ) ausgeübt wird, die den niedrigsten öffnungswinkel (A₁, A₂) bildet, der gleich 650/(l*h*(2,67-0,33*p)) ist.

2. Fahrradreifen (1) nach Anspruch 1, wobei die Höhe h der Zähne (51) mindestens gleich 0,6 mm und höchstens gleich 3 mm ist.

3. Fahrradreifen (1) nach Anspruch 1 oder 2, wobei der Reifen (1) eine Schnittbreite S aufweist, wobei die Länge l der Zähne (51) mindestens gleich 0,15 Mal und höchstens gleich 0,50 Mal die Schnittbreite S des Reifens ist.

4. Fahrradreifen (1) nach einem der Ansprüche 1 bis 3, wobei der Abstand p der Zahnung (5) mindestens gleich 1,8 mm und höchstens gleich 5,5 mm ist.

5. Fahrradreifen (1) nach einem der Ansprüche 1 bis 4, wobei der Abstand p der Zahnung (5) mindestens gleich 2 mm und höchstens gleich 3 mm ist.

6. Fahrradreifen (1) nach einem der Ansprüche 1 bis 5, wobei die Mantellinie (G) der Zahnung (5) mit der Richtung (TT') der Radialebene (YZ), die tangential zu der axial äußeren Fläche (21) der Seitenwand (2) verläuft, einen Winkel (B) bildet, der mindestens gleich 4° und höchstens gleich 40° ist.

7. Fahrradreifen (1) nach einem der Ansprüche 1 bis 6, wobei die Mantellinie (G) der Zahnung (5) mit der Richtung (TT') der Radialebene (YZ), die tangential zu der axial äußeren Fläche (21) der Seitenwand (2) verläuft, einen Winkel (B) bildet, der mindestens gleich 15° und höchstens gleich 30° ist.

8. Fahrradreifen (1) nach einem der Ansprüche 1 bis 7, wobei die erste und die zweite Seite (IK, IJ) des im Wesentlichen dreieckigen Abschnitts (IJK) jedes Zahns (51) ein geradliniges Profil aufweisen.

9. Fahrradreifen (1) nach einem der Ansprüche 1 bis 8, wobei die erste und die zweite Seite (IK, IJ) des im Wesentlichen dreieckigen Abschnitts (IJK) jedes Zahns (51) ein krummliniges Profil aufweisen.

10. Fahrradreifen (1) nach einem der Ansprüche 1 bis 9, wobei die Zahnung (5) ein Textilmaterial, vorzugsweise aus aliphatischem Polyamid, umfasst.

## Claims

1. Bicycle tyre (1) comprising:
- two sidewalls (2) connecting a tread (3) to two beads (4),
- a continuous toothset (5), of generatrix (G) substantially radial with respect to the axis of rotation of the tyre of axial direction (YY'), positioned circumferentially on an axially exterior face (21) of at least one sidewall (2), and intended to collaborate with a complementary toothset,
- the toothset (5) being made up of teeth (51) that are equidistant by a pitch p,
- each tooth (51) having a length l, in the direction of the generatrix (G), and a substantially triangular section (IJK) in a plane (UV) perpendicular to the generatrix (G),
- the substantially triangular section (IJK) comprising a first and a second side (IK, IJ) emanating from a first vertex (I), referred to as the crest of the tooth, and a third side (JK) opposite the first vertex (I) and positioned on the axially exterior face (21) of the sidewall (2),
- the first and second sides (IJ, IK) respectively forming, with the direction (VV') perpendicular to the third side (JK), a first and a second angle (A₁, A₂),
- the distance between the crest (I) of the tooth (51) and its orthogonal projection (H) onto the third side (JK) defining the height h of the tooth (51),
- each tooth (51) comprising an elastomeric material having an elastic shear modulus G*,
**characterized in that** the elastic shear modulus G* of the elastomeric material of the teeth (51) is at least equal to a threshold elastic shear modulus G*ₛ, the threshold elastic shear modulus G*ₛ being such that the displacement d of the crest (I) of each tooth (51) is equal to 0.2 times the height h of the tooth (51) under the action of a uniform pressure P applied by the complementary toothset to the side (IK, IJ) that forms the smallest angle (A₁, A₂), equal to 650/(l×h×(2.67-0.33Xp)).

2. Bicycle tyre (1) according to Claim 1 **in which** the height h of the teeth (51) is at least equal to 0.6 mm and at most equal to 3 mm.

3. Bicycle tyre (1) according to one of Claims 1 and 2, the tyre (1) having a section width S, **in which** the length l of the teeth (51) is at least equal to 0.15 times and at most equal to 0.50 times the section width S of the tyre.

4. Bicycle tyre (1) according to any one of Claims 1 to 3, **in which** the pitch p of the toothset (5) is at least equal to 1.8 mm and at most equal to 5.5 mm.

5. Bicycle tyre (1) according to any one of Claims 1 to 4, **in which** the pitch p of the toothset (5) is at least equal to 2 mm and at most equal to 3 mm.

6. Bicycle tyre (1) according to any one of Claims 1 to 5, **in which** the generatrix (G) of the toothset (5) forms, with the direction (TT') of the radial plane (YZ) tangential to the axially exterior face (21) of the sidewall (2), an angle (B) at least equal to 4° and at most equal to 40°.

7. Bicycle tyre (1) according to any one of Claims 1 to 6, **in which** the generatrix (G) of the toothset (5) forms, with the direction (TT') of the radial plane (YZ) tangential to the axially exterior face (21) of the sidewall (2), an angle (B) at least equal to 15° and at most equal to 30°.

8. Bicycle tyre (1) according to any one of Claims 1 to 7, **in which** the first and second sides (IK, IJ) of the substantially triangular section (IJK) of each tooth (51) have a rectilinear profile.

9. Bicycle tyre (1) according to any one of Claims 1 to 8, **in which** the first and second sides (IK, IJ) of the substantially triangular section (IJK) of each tooth (51) have a curvilinear profile.

10. Bicycle tyre (1) according to any one of Claims 1 to 9, **in which** the toothset (5) contains a textile material, preferably of aliphatic polyamide type.
